# EUROPÄISCHE PATENTANMELDUNG

(11) **EP 2 977 717 A1**
(43) Veröffentlichungstag der Anmeldung: **27.01.2016**
(21) Anmeldenummer: 14002592.5
(22) Anmeldetag: 25.07.2014
(51) Int. Cl.: G01B 7/06, G01D 5/24, G01R 27/26

(54) **Vorrichtung und Verfahren zur Messung der Stapelhöhe von Druckmedien**

(71) Anmelder: Pepperl + Fuchs GmbH, 68307 Mannheim (DE)
(72) Erfinder: Vater, Jochen, 68307 Mannheim (DE); Kurkovskij, Igor, 68307 Mannheim (DE); Wieth, Hermann, 68307 Mannheim (DE)
(74) Vertreter: Koch Müller Patentanwaltsgesellschaft mbH

(57) **Zusammenfassung**

Vorrichtung ausgebildet zur Messung der Stapelhöhe oder Dicke eines Druckmediums mittels einer Messung von Ladezeitänderungen eines Messkondensators, wobei der Messkondensator für eine Aufnahme von Druckmedien ausgebildet ist und ein Messkreis vorgesehen ist und der Messkreis einen Messverstärker mit einem Ausgang und einem Messwiderstand und der Messkondensator aufweist und der Messwiderstand und der Messkondensator ein RC-Glied ausbilden und ein Komparator vorgesehen ist , wobei der Komparator einen ersten Eingang und einen Ausgang aufweist und der erste Eingang des Komparators mit dem Ausgang des Messverstärkers verschaltet ist und eine Steuerungseinheit vorgesehen ist und die Steuerungseinheit mit dem Ausgang des Komparators und mittels eines ersten Ausgang mit dem RC-Glied verschaltet ist und wobei mittels der Steuerungseinheit zu einem ersten Zeitpunkt das RC-Glied mittels des ersten Ausgangs mit einem Ladestrom beaufschlagt ist und die Steuerungseinheit eingerichtet ist, eine zu einem zweiten Zeitpunkt am Ausgang des Komparators auftretende erste Spannungsänderung zu detektieren und aus der Differenz des ersten Zeitpunkts und des zweiten Zeitpunkts eine Ladezeit zu ermitteln und aus einem Vergleich der ermittelten Ladezeit mit einer Referenzzeit die Stapelhöhe oder Dicke des Druckmedium zu bestimmen, wobei die Stapelhöhe als das n-fache einer minimalen Dicke gegeben ist und wobei der Komparator einen mit der Steuerungseinheit verbundenen zweiten Eingang aufweist und mittels der Steuerungseinheit an den zweiten Eingang während des Anliegens des Ladestroms eine erste Referenzspannung angelegt ist, und die Steuerungseinheit einen zweiten Ausgang aufweist und an dem zweiten Ausgang der Digitaleingang eines Digital-Analog-Konverter angeschlossen ist und an dem analogen Ausgang des Digital-Analog-Konverters ein analoges Signal anliegt, wobei die Höhe des analogen Signals von der ermittelten Stapelhöhe oder Dicke des Druckmediums abhängt, und die Steuerungseinheit einen Triggereingang aufweist, und mittels eines Triggersignals an dem Triggereingang eine Ermittlung der Stapelhöhe oder Dicke des Druckmediums startet.

## Beschreibung

Die Erfindung betrifft eine Vorrichtung und ein Verfahren zur Messung der Stapelhöhe von Druckmedien gemäß dem Oberbegriff des Anspruchs 1 und des Oberbegriffs des Anspruchs 12.

Aus der US 2009 / 003340 A1 sind eine Schaltung und ein Verfahren zur Ermittlung der Kapazitätsänderung eines Kondensators eines RC-Glieds offenbart. Hierbei ist der Kondensator als Plattenkondensator zur Detektion einer Stapelhöhe oder der Dicke eines Druckmediums ausgelegt. Zur Ermittlung der Stapelhöhe wird von einer Steuerungseinheit der Messkreis bzw. das RC-Glied mit einem Strom oder Spannung aus der Steuerungseinheit beaufschlagt und die Ladezeit aus der Differenz des Zeitpunktes an dem der Strom bzw. die Spannung angelegt worden ist und dem Zeitpunkt an dem eine Spannungsänderung an dem Ausgang eines Komparators auftritt, errechnet. Indem eine Variation der Füllhöhe bzw. Stapelhöhe zwischen den Platten die Ladezeiten ändert, lässt sich aus der Bestimmung der Ladungszeitänderungen eine Aussage über die Stapelhöhe treffen. Hierbei ist es wünschenswert, die Sensitivität der Messung zu erhöhen, um eine genauere Bestimmung der Stapelhöhe zu erzielen.

Vor diesem Hintergrund besteht die Aufgabe der Erfindung darin, eine Vorrichtung und ein Verfahren anzugeben, die jeweils den Stand der Technik weiterbilden.

Die Aufgabe wird durch eine Vorrichtung zur Messung von Ladezeiten mit den Merkmalen des Anspruchs 1 und durch ein Verfahren gemäß mit den Merkmalen des Anspruchs 12 gelöst. Vorteilhafte Ausgestaltungen der Erfindung sind Gegenstand von Unteransprüchen.

Gemäß dem ersten Gegenstand der Erfindung wird eine Vorrichtung ausgebildet zur Messung der Stapelhöhe oder Dicke eines Druckmediums mittels einer Messung von Ladezeiten, insbesondere Ladezeitänderungen eines Messkondensators bereitgestellt, wobei der Messkondensator für eine Aufnahme von Druckmedien ausgebildet ist und ein Messkreis vorgesehen ist und der Messkreis einen Messverstärker mit einem Ausgang und einem Messwiderstand und der Messkondensator aufweist und der Messwiderstand und der Messkondensator ein RC-Glied ausbilden und ein Komparator vorgesehen ist , wobei der Komparator einen ersten Eingang und einen Ausgang aufweist und der erste Eingang des Komparators mit dem Ausgang des Messverstärkers verschaltet ist und eine Steuerungseinheit vorgesehen ist und die Steuerungseinheit mit dem Ausgang des Komparators und mittels eines ersten Ausgang mit dem RC-Glied verschaltet ist und wobei mittels der Steuerungseinheit zu einem ersten Zeitpunkt das RC-Glied mittels des ersten Ausgangs mit einem Ladestrom beaufschlagt ist und die Steuerungseinheit eingerichtet ist, eine zu einem zweiten Zeitpunkt am Ausgang des Komparators auftretende erste Spannungsänderung zu detektieren und aus der Differenz des ersten Zeitpunkts und des zweiten Zeitpunkts eine Ladezeit zu ermitteln und aus einem Vergleich der ermittelten Ladezeit mit einer Referenzzeit die Stapelhöhe oder Dicke des Druckmedium zu bestimmen, wobei die Stapelhöhe als das n-fache einer minimalen Dicke gegeben ist und wobei der Komparator einen mit der Steuerungseinheit verbundenen zweiten Eingang aufweist und mittels der Steuerungseinheit an den zweiten Eingang während des Anliegens des Ladestroms eine erste Referenzspannung angelegt ist, und die Steuerungseinheit einen zweiten Ausgang aufweist und an dem zweiten Ausgang der Digitaleingang eines Digital-Analog-Konverter angeschlossen ist und an dem analogen Ausgang des Digital-Analog-Konverters ein analoges Signal anliegt, wobei die Höhe des analogen Signals von der ermittelten Stapelhöhe oder Dicke des Druckmediums abhängt, und die Steuerungseinheit einen Triggereingang aufweist, und mittels eines Triggersignals an dem Triggereingang eine Ermittlung der Stapelhöhe oder Dicke des Druckmediums startet.

Gemäß dem zweiten Gegenstand der Erfindung wird ein Verfahren zur Messung der Stapelhöhe oder Dicke eines Druckmediums bereitgestellt, wobei Ladezeiten, insbesondere Ladezeitänderungen eines Messkondensators gemessen werden und der Messkondensator für eine Aufnahme von Druckmedien ausgebildet ist und des Weiteren ein Messkreis vorgesehen ist, wobei der Messkreis einen Messverstärker mit einem Ausgang und einen Messwiderstand und den Messkondensator aufweist und der Messwiderstand und der Messkondensator ein RC-Glied ausbilden und ein Komparator vorgesehen ist und der Komparator einen ersten Eingang und einen Ausgang aufweist, wobei der erste Eingang mit dem Ausgang des Messverstärkers verschaltet ist und die Steuerungseinheit mit dem Ausgang des Komparators verschaltet ist und wobei von der Steuerungseinheit zu einem ersten Zeitpunkt das RC-Glied mittels des ersten Ausgangs mit einem Ladestrom beaufschlagt wird und der Messkondensator über den Messwiderstand geladen wird, und mittels der Steuerungseinheit die zu einem zweiten Zeitpunkt am Ausgang des Komparators auftretende erste Spannungsänderung detektiert wird und mittels der Steuerungseinheit aus der Differenz des ersten Zeitpunkts und des zweiten Zeitpunkts eine Ladezeit ermittelt wird und aus einem Vergleich der ermittelten Ladezeit mit einer Referenzzeit die Stapelhöhe oder Dicke des Druckmedium bestimmt wird, wobei die Stapelhöhe als das n-fache einer minimalen Dicke gegeben ist, wobei der Komparator einen mit der Steuerungseinheit verbundenen zweiten Eingang aufweist und mittels der Steuerungseinheit an den zweiten Eingang während des Anliegens des Ladestroms eine erste Referenzspannung angelegt wird, und die Steuerungseinheit einen zweiten Ausgang aufweist und an dem zweiten Ausgang der Digitaleingang eines Digital-Analog-Konverter angeschlossen ist und der Digital-Analog-Konverter einen analogen Ausgang aufweist und mittels der Steuerungseinheit an dem zweiten Ausgang ein digitales Signal an dem analogen Ausgang ein analoges Signal angelegt wird, wobei die Höhe des analogen Signals von der ermittelten Stapelhöhe oder Dicke des Druckmediums abhängt, und die Steuerungseinheit einen Triggereingang aufweist, und mittels eines Triggersignals an dem Triggereingang von der Steuerungseinheit eine Ermittlung der Stapelhöhe oder Dicke des Druckmediums gestartet wird.

Es sei angemerkt, dass die Ermittlung der Dicke des Druckmediums bzw. der Stapelhöhe aus der Ladezeit im Vergleich zu der Referenzzeit erfolgt. Hierzu die gemessene Ladezeit mit einer Referenzzeit verglichen. Die Referenzzeit ist vorgegeben und gespeichert. Es versteht sich jedoch, dass sich die Referenzzeit ändern lässt und sich insbesondere mehrere unterschiedliche Referenzzeiten speichern lassen. Des Weiteren sei angemerkt, dass mit auch aus der Änderung der Ladezeit und dem Vergleich mit der Referenzzeit oder mehreren Referenzzeiten sich die Dicke des Druckmediums oder die Stapelhöhe bestimmen lässt.

Ein Vorteil der erfindungsgemäßen Vorrichtung und des Verfahrens ist es, dass eine analoge Größe ausgegeben wird und sich mittels des Werts der analogen Größe jederzeit die Höhe des Stapels oder Schwankungen der Stapelhöhe ablesen lässt. Im Unterschied zu einer rein digitalen Ausgabe, mit der nur reine Zahlenwerte darstellbar sind, wie beispielsweise die ermittelte Blattanzahl auf dem Stapel des Druckmediums in dem Messkondensator lassen sich aus dem zeitlichen Verlaufs der analogen Größe auch statische Aufladungen oder Schwankungen der relativen Dielektrizitätskonstante einfach und leicht erkennen.

In einer besonders bevorzugten Weiterbildung wird mittels der Steuerungseinheit zu einem dritten Zeitpunkt das RC-Glied mit einem Entladestrom beaufschlagt und eine zweite Referenzspannung an den zweiten Eingang des Komparators angelegt und die zu einem vierten Zeitpunkt am Ausgang des Komparators auftretende zweite Spannungsänderung mittels der Steuerungseinheit detektiert. Aus der Differenz des dritten Zeitpunkts und des vierten Zeitpunkts läst sich eine Entladezeit ermitteln, und anschließend mittels der Steuerungseinheit eine Korrekturgröße aus dem Verhältnis der Ladezeit und der Entladezeit ermitteln und die Ladezeit und / oder die Entladezeit mittels der Korrekturgröße korrigieren und die Stapelhöhe des Druckmediums aus einem Vergleich der korrigierten Ladezeit und / oder korrigierten Entladezeit ermitteln. Hiernach lässt sich die Stapelhöhe des Druckmediums aus einem Vergleich der korrigierten Ladezeit und / oder Entladezeit und einem gespeicherten Zeitkennwert bzw. der Referenzzeit ermittelt.

In einer anderen Weiterbildung wird für die Ermittlung der Referenzzeit in einem vorzugsweise ersten Kalibrationsschritt einer erste Lade- und / oder eine erste Entladezeit für einen leeren oder ungefüllten Messkondensator und hierdurch die Nennkapazität des Messkondensator bestimmt und in einem vorzugsweise zweiten Kalibrationsschritt mittels der minimalen Dicke des Druckmediums eine zweite Lade- und / oder eine zweite Entladezeit und für eine minimale Dicke des Druckmediums und hieraus die analoge Größe eine minimale Quantisierungseinheit des Kapazitätswert festgelegt. In einer bevorzugten Weiterbildung wird als Referenzzeit in einem vorzugsweise dritten Kalibrationsschritt mit einer Füllung mit einer Soll-Stapelhöhe oder Solldicke eine dritte Ladezeit und / oder eine dritte Entladezeit bestimmt. Vorteilhaft ist, dass sich aus der Ermittlung der Lade- und Entladezeiten für unterschiedliche Füllgrade des Messkondensators mehrere Korrekturgrößen für die Berechnung der Stapelhöhe oder der Dicke des Druckmediums berechnen lassen.

Für die Ausgabe der analogen Größe lässt sich hierdurch ein Sollwert, vorzugsweise eine Sollkapazität, aus einem N-fachen Wert der minimalen Dicke des Druckmediums festlegen. Hierdurch lässt sich die zu überwachende Dicke eines Druckmediums als Sollwert der analogen Größe ausgeben und vorzugsweise in der Anzeigeeinheit darstellen. Die Ermittlung der Nennkapazität oder des Werts der minimalen Quantisierungseinheit oder der Sollkapazität wird bevorzugt von der Steuereinheit mittels eines an einem Triggereingang anliegendem Triggersignal gestartet. Untersuchungen haben gezeigt, dass es bevorzugt ist, die Ermittlung der Referenzzeiten am Beginn der Ermittlung der Stapelhöhe oder Dicke des Druckmediums durchzuführen, um nicht auf bereits eingespeicherte Standardwerte zurückzugreifen. Hierdurch lässt sich die Zuverlässigkeit und insbesondere die Genauigkeit der Ermittlung der Stapelhöhe oder der Dicke des Druckmediums erhöhen.

In einer Weiterbildung ist an den Ausgang des Digital-Analog-Konverters eine Verstärkereinheit angeschlossen. Ein Vorteil ist, dass sich unterschiedliche Anzeigegeräte zur Ausgabe der analogen Größe unmittelbar anschließen lassen. Bevorzugt ist, in die Verstärkereinheit eine Anzeigeeinheit mit einem Aussteuerbereich zu integrieren. Insbesondere ist es vorteilhaft, dass ein der Soll-Stapelhöhe oder der Solldicke zugeordneter Wert des Soll-Signals in der Mitte des Aussteuerbereichs liegt.

In einer Ausführungsform ist der angezeigte Aussteuerbereich quantisiert, wobei Schrittweite der Quantisierung einem minimalen Signalhub des Signals entspricht und die Schrittweite durch die minimale Dicke des Druckmediums gegeben ist. Bevorzugt ist, dass in dem Anzeigebereich ein Intervall mit der Größe der Schrittweite symmetrisch um den Wert des Soll-Signals ausgebildet ist, wobei in der Anzeigeeinheit den der Solldicke oder Soll-Stapelhöhe zugeordnete Werte des Soll-Signals angezeigt ist, solange der Wert des analogen Signals innerhalb des Intervalls liegt.

Gemäß einer anderen Ausführungsform ist an dem analogen Ausgang eine Anzeigeeinheit insbesondere integriert in den Verstärker vorgesehen bzw. mit dem analogen Ausgang verschaltet. Hierbei ist es bevorzugt, in der Anzeigeeinheit als unterer Wert das N-x fache und als oberer Wert das N+x Fache anzuzeigen, wobei x ein ganzzahliges Vielfaches der Schrittweite der Quantisierung, insbesondere des minimalen Kapazitätswerts ist, und vorzugsweise x =3, höchst vorzugsweise ist x= 2 umfasst. Ein Vorteil ist, dass in der Anzeigeeinheit als Anzeigebereich nur ein relevanter Ausschnitt des gesamten Messbereichs dargestellt wird. Nachfolgend wird der Anzeigebereich auch als Aussteuerbereich bezeichnet. Untersuchungen haben gezeigt, dass es vorteilhaft ist, wenn ein der Soll-Stapelhöhe oder der Solldicke zugeordneter Wert des analogen Soll-Signals in der Mitte des Aussteuerbereichs bzw. Anzeigebereichs liegt und in der Anzeigeeinheit den der Solldicke oder Soll-Stapelhöhe zugeordnete Werte des Soll-Signals angezeigt wird und insbesondere solange der Wert des analogen Signals. d.h. der Istwert innerhalb des Intervalls liegt.

Untersuchungen haben gezeigt, dass eine vergrößerte Darstellung von wenigen minimalen Quantisierungseinheiten, d.h. einzelnen Blattdicken, um den Sollwert N der Kapazität eine besondere zuverlässige und übersichtliche Kontrolle der Blattanzahl oder der Stapelhöhe eines Druckmediums während eines Produktionsprozesses in der Druckindustrie bereitstellt.

In einer Weiterbildung wird von der Steuereinheit die analoge Größe mit einem Schwellwert verglichen, wobei der Schwellwert um einen Bruchteil der Quantisierungseinheit von dem Sollwert beabstandet ist und hierdurch einen Bereich aufspannt, indem die Stapelhöhe als richtig eingestuft wird. In einer Weiterbildung wird von der Steuereinheit ein Signal ausgeben, sofern der Wert der analogen Größe außerhalb des Bereichs liegt. Vorzugsweise liegt der Schwellwert bei 50% der Quantisierungseinheit, d. h. bei einem Sollwert von beispielsweise 10 Blatt Papier wird ein Bereich von 9,5 bis 10,5 aufgespannt. Hierdurch lässt sich die Grenze für die Entscheidung, inwieweit die Stapelhöhe korrekt oder falsch ist, individuell festlegen und die Anzahl der Falschaussagen reduzieren. Falschaussagen sind hierbei sowohl als richtig eingestufte Falschmengen als auch als fehlerhaft eingestufte Richtigmengen. Insbesondere bei einer sogenannten Doppelsignaturkontrolle ist es vorteilhaft, den X-Wert auf 2 zu setzen und den Schwellwert auf 50% zu legen. Um die Prozesssicherheit zu erhöhen ist es auch vorstellbar, den Schwellwert auch näher an den Sollwert zu verschieben, d. h. den Schwellwert insbesondere nur auf 20% zu legen und hierdurch den Gutbereich wesentlich einengen. Zwar werden hierdurch mehr Falschaussagen getroffen, jedoch lässt sich die Anzahl der fälschlicherweise als richtig eingestuften Fehlmengen wesentlich reduzieren.

Vorzugsweise ist die Steuerungseinheit eingerichtet, für den jeweiligen Füllgrad das Verhältnis aus einer unmittelbar auf die Ladezeit folgende Entladezeit zu bestimmen. Hierdurch wird die Korrektur von Störgrößen besonders exakt, indem nur wenig Zeit zwischen dem auf einen Ladezyklus folgenden Entladzyklus verstreicht, ist eine Veränderung der Störung zwischen den beiden Zyklen besonders klein und die Korrektur der Lade- / Entladezeiten verbessert sich.

In einer anderen Weiterbildung wird aus der Kenntnis der Größe der Störung und folglich der ersten Korrekturgröße mittels der Steuerungseinheit die Ladekennlinie und / oder die Entladekennlinie korrigiert. Gemäß einer anderen Weiterbildung ist es vorteilhaft, den Ladestrom im Wesentlichen gleich groß zu dem Entladestrom zu wählen. Hierdurch lässt sich die Genauigkeit der Bestimmung der Lade- Entladezeiten erhöhen.

Es versteht sich, dass die zweiten und vierten Zeitpunkte, diejenigen Zeitpunkte sind, an denen die steigende bzw. die fallende Spannung an dem RC-Glied, die an dem Komparator anliegenden Referenzspannungshöhen durchläuft. Hierbei ist der zweite Zeitpunkt als derjenige Zeitpunkt gegeben, an welchem die Höhe der ansteigenden Spannung im Wesentlichen gleich einer ersten Referenzspannung ist. Ferner ist der vierte Zeitpunkt als derjenige Zeitpunkt gegeben, an welchem die Höhe der abfallenden Spannung im Wesentlichen gleich einer zweiten Referenzspannung entspricht, wobei die zweite Referenzspannung kleiner als die erste Referenzspannung ist. In einer Weiterbildung ist die Höhe der ersten Referenz-Spannung und / oder die Höhe der zweiten Referenzspannung einstellbar ausgeführt. Untersuchungen haben gezeigt, dass sich die Empfindlichkeit der Messvorrichtung bzw. des Messverfahrens mittels der Korrektur der Lade-/ Entladezeit erhöht. Insbesondere lässt sich mittels des Verhältnisses aus der Ladezeit zu der Entladezeit diejenigen Störungen weitestgehend eliminieren, deren Offsetspannungen oder Störströme hinsichtlich des Vorzeichens und der Größe langsamer ändern als im Vergleich zu den Lade / Entladezyklen.

In einer Ausführungsform weist der Messwiderstand einen ersten mit der Steuereinheit verschalteten Anschluss auf und ferner weist der Messwiderstand einen mit einer ersten Platte des Messkondensators verschalteten zweiten Anschluss auf. Des Weiteren weist der Messkondensator eine mit einem Bezugspotential verschaltete zweite Platte auf, wobei die zweite Platte eine für die Aufnahme von Druckmedien äquidistant zu der Fläche der ersten Platte beabstandete Fläche aufweist und der zweite Anschluss mit einem Eingang des Messverstärkers verschaltet ist und ein Ausgang des Messverstärkers mittels einem ersten Eingang des Komparators verschaltet ist.

Gemäß einer weiteren Ausbildung ist der Ausgang des Messverstärkers mit einem Eingang eines Entkopplungsverstärkers verschaltet und ein Ausgang des Entkopplungsverstärkers ist mit einer Schirmelektrode, welche den Messkondensator abschirmt, verschaltet.

In einer Weiterbildung ist die Höhe der ersten Referenzspannung und / oder die Höhe der zweiten Referenzspannung mittels der Steuerungseinheit einstellbar. Hierdurch lässt sich die Messzeiten für die Lade- / Entladezeiten ändern. Indem die erste Referenzspannung verringert wird, verringert sich bei gleicher Stapelhöhe ebenfalls die Ladezeit. Indem die zweite Referenzspannung erhöht wird, verringert sich bei gleicher Stapelhöhe die Entladezeit.

Gemäß einer anderen Weiterbildung, sind der Ausgang des Messverstärkers mit einem Eingang eines Entkopplungsverstärkers und ein Ausgang des Entkopplungsverstärkers mit einer Schirmelektrode, welche den Messkondensator abschirmt, verschaltet. Des Weiteren ist es bevorzugt, dass die Steuerungseinheit mit dem Ausgang des Komparators verschaltet ist. Außerdem ist es bevorzugt, dass der Komparator einen zweiten Eingang aufweist, der mit einer ersten Referenzspannung und / oder mit einer zweiten Referenzspannung verschaltet ist.

Die Erfindung wird nachfolgend unter Bezugnahme auf die Zeichnungen näher erläutert. Hierbei werden gleichartige Teile mit identischen Bezeichnungen bezeichnet. Die dargestellten Ausführungsformen sind stark schematisiert, d.h. die Abstände und die lateralen und die vertikalen Erstreckungen sind nicht maßstäblich und weisen, sofern nicht anders angegeben auch keine ableitbare geometrische Relation zueinander auf. Darin zeigt:
- Figur 1: eine Schaltungsanordnung zur Ermittlung der Stapelhöhe,
- Figur 2: eine schematisierte Ausführungsform eines Messkondensators der Schaltungsanordnung der Figur 1,
- Figur 3: eine Bereichsauswahl für die Darstellung des analogen Signals basierend auf einem Vielfachen einer minimalen Schichtlage.

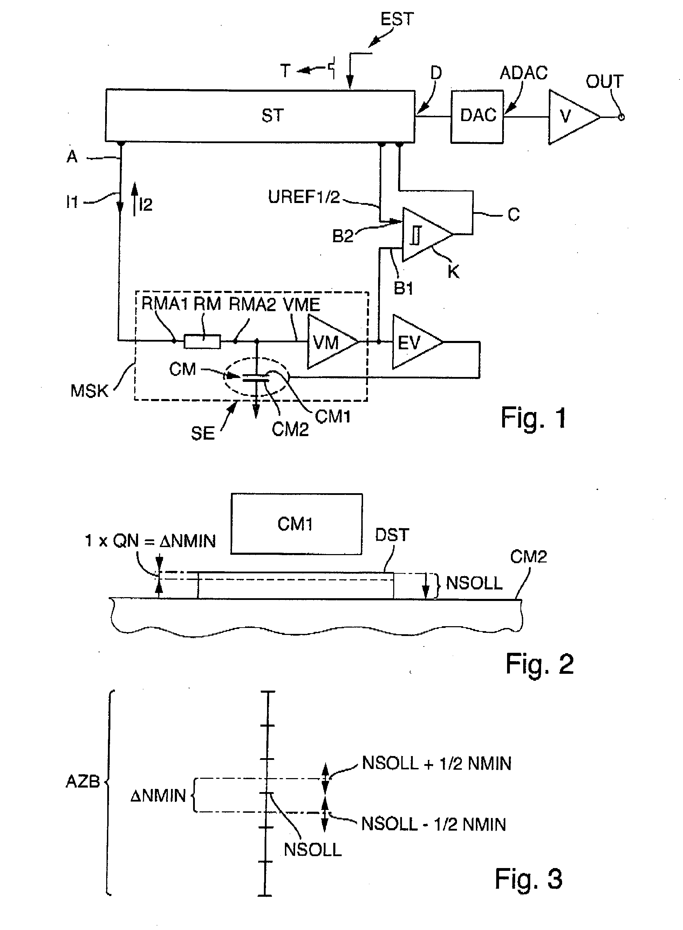

Die Abbildung der Figur 1 zeigt eine Ausführungsform der Schaltungsanordnung, aufweisend einen Messkreis MSK mit einem RC-Glied und einem Messverstärker VM mit einem Ausgang, einen Komparator K, der einen ersten Eingang B1 und einen zweiten Eingang B2 und einen Ausgang C aufweist, wobei der erste Eingang B1 mit dem Ausgang des Messverstärkers VM und der zweite Eingang B2 mit einer Steuerungseinheit ST verschaltet ist. Die Steuerungseinheit ST weist einen ersten mit dem Messkreis MSK verschaltet Ausgang A auf. Mittels des Ausgangs A der Steuerungseinheit ST ist das RC-Glied mit einem Ladestrom 11 oder mit einem Entladestrom 12 beaufschlagt. Ferner ist die Steuerungseinheit ST eingerichtet, an einem Ausgang C des Komparators K auftretende Spannungsänderung zu detektieren. Des Weiteren ist der Ausgang des Messverstärkers VM oder den Ausgang des Referenzverstärkers VR mit dem Eingang des Komparators K verbindet. Zusätzlich ist der Ausgang des Messverstärkers VM mit einem Eingang eines Entkopplungsverstärkers EV verschaltet und ein Ausgang des Entkopplungsverstärkers EV ist mit einer Schirmelektrode SE, welche den Messkondensator VM abschirmt, verschaltet. Des Weiteren weist das erste RC-Glied einen Messwiderstand RM mit einem ersten Anschluss RMA1 und einem zweiten Anschluss RMA2 und einen Messkondensator CM, mit einer ersten Platte CM1 und einer zweiten Platte CM2 auf, wobei die zweite Platte CM2 mit einem Bezugspotential GND verschaltet und als im Wesentlichen zur ersten Platte CM1 gleich beabstandete Fläche zur Aufnahme von Druckmedien ausbildet ist und ferner ist der zweite Anschluss RMA2 mit der ersten Platte CM1 verschaltet. Des Weiteren weist der Messverstärker VM einen mit dem zweiten Anschluss RMA2 des Messwiderstandes RM verschalteten Eingang VME auf. Außerdem weist der Komparator K einen zweiten Eingang auf, der mit einem ersten Referenzpotential UREF1 oder einem zweiten Referenzpotential UREF2 mit der Steuerungseinheit ST verschaltet ist, wobei bevorzugt ist, die Referenzpotentiale UREF1 und UREF2 einstellbar auszuführen. Ferner weist die Steuerungseinheit ST einen zweiten Eingang EST auf. An dem zweiten Eingang EST lässt sich mittels eines Triggersignals T in einer Kalibrationsphase verschiedene Kalibrationsschritte starten. Ferner weist die Steuerungseinheit ST einen zweiten Ausgang D auf. Der zweite Ausgang D ist mit dem Eingang eines Digital-Analog-Konverter DAC verschaltet. Der Digital-Analog-Konverter DAC weist einen analogen Ausgang ADAC auf zur Ausgabe einer analogen Größe. Der analoge Ausgang ADAC ist mit einem Eingang einer Verstärkerstufe V verschaltet ist. An einem analogen Ausgang OUT der Verstärkerstufe V liegt das verstärkte Signal der analogen Größe an.

Mittels des schematisiert dargestellten Messkondensators CM dessen mit dem Bezugspotential verschalteten zweiten Platte CM2 als Auflagefläche für das Druckmedium dient, wird als Ausgangspunkt zur Bestimmung der Stapelhöhe oder der Dicke des Druckmediums ein Ladestrom I1 angelegt. Hierbei wird der erste Schwellwert UREF1 umso später erreicht, d.h. die Ladezeit ist umso größer, je höher die relative Dielektrizitätskonstante des Druckmediums und die Stapelhöhe bzw. die Gesamtdicke des Druckmediums ist. Sobald das Potential an dem ersten Eingang B1 des Komparators K die an dem zweiten Eingang B2 anliegende erste Referenzspannung UREF 1 erreicht, ändert sich am Ausgang C des Komparators K die Spannung. Aus der Zeit zwischen Anlegen des Ladestrom I1 und der Spannungsänderung am Ausgang C des Komparators K ergibt sich die Ladezeit. Entsprechendes gilt für den Entladezeitraum; sobald in dem geladen Zustand des Messkondensators CM der Entladestrom I2 angelegt von der Steuerungseinheit ST wird beginnt der Entladezeitraum. Hierbei wird der zweite Schwellwert UREF2 umso später erreicht, d.h. die gemessene Entladezeit ist umso größer, je höher die relative Dielektrizitätskonstante des Druckmediums und die Stapelhöhe ist bzw. die Gesamtdicke des Druckmediums ist. Sobald das Potential am ersten Eingang B1 des Komparators K die zweite Referenzspannung UREF2 erreicht, ändert sich am Ausgang C des Komparators K wiederum die Spannung. Aus der Zeit zwischen Anlegen des Entladestrom I2 und der Spannungsänderung am Ausgang C des Komparators K ergibt sich die Entladezeit. Aus dem Unterschied, insbesondere aus dem Verhältnis von der Ladezeit zu der Entladezeit, lässt sich, unter der Annahme einer in einer ersten Näherung zeitlich konstanten Störung und einer konstanten Stapelhöhe insbesondere während eines Lade- Entladezeitraums, die Höhe der Störung ermitteln und die Ladezeit bzw. die Entladezeit entsprechend korrigieren. Hiernach lässt sich anschließend eine korrigierte Stapelhöhe ermitteln.

Es sei angemerkt, dass in einem ersten Zustand am Ausgang A der Steuerungseinheit ST zu einem Zeitpunkt t1 eine rechteckförmige Spannung an das erste RC Glied angelegt wird, d. h. der Messkondensator CM wird mittels des Ladestroms I1 geladen. Eine zugehörige - vorliegend nicht dargestellte - beispielhafte Ladezeitkurve aufgenommen an dem Punkt B der Schaltungsanordnung d.h. am Ausgang des Messverstärkers VM zeigt, dass zu einem Zeitpunkt t2 der steigende Spannungsverlauf am Ausgang des Messverstärkers VM eine am Komparator K anliegende erste Referenzspannung UREF1 schneidet und die Steuereinheit detektiert in Folge an dem Ausgang C des Komparators K einen Spannungssprung. Aus der Differenz der beiden Zeitpunkte t1 und t2 lässt sich die zugehörige Ladezeit ermitteln.

Des Weiteren wird in einem zweiten Zustand an dem Ausgang A der Steuerungseinheit ST zu einem Zeitpunkt t3 die rechteckförmige Spannung an das erste RC Glied auf ein Bezugspotential, vorzugsweise Massepotential geschaltet, d. h. der Messkondensator CM wird entladen. Eine zugehörige beispielhafte Entladezeitkurve an dem Punkt B der Schaltungsanordnung d.h. am Ausgang des Messverstärkers VM ergibt, dass zu einem Zeitpunkt t4 der fallende Spannungsverlauf am Ausgang des Messverstärkers VM eine am Komparator K anliegende Referenzspannung UREF2 schneidet und die Steuerungseinheit ST detektiert den zugehörigen Spannungssprung an dem Ausgang C des Komparators K. Aus der Differenz der beiden Zeitpunkte t3 und t4 lässt sich die zugehörige Entladezeit ermitteln.

Unter der Annahme, dass für den Ladezyklus als auch für den nachfolgenden Entladezyklus ein nahezu konstanter Störstrom vorhanden ist, führt der Störstrom beispielsweise zu einer Erhöhung des Ladestroms I1 und zu einer Erniedrigung des Entladestroms I2. Demgemäß ist die Ladezeit gegenüber der Entladezeit verkürzt. Hierdurch lässt sich unter Annahme, dass die Stapelhöhe bei beiden Zeiten gleich hoch ist, sowohl die Lade- als auch die Entladezeit korrigieren. Anschließend lässt sich auch die einen korrigierten Wert für die Stapelhöhe ermitteln, indem die korrigierte Lade- bzw. Entladezeit mit einer Referenzzeit verglichen wird, wobei die Referenzzeit zuvor für eine bekannte Stapelhöhe ermittelt wird.

Um insbesondere die Zuverlässigkeit des Messverfahrens für die Erkennung einer Falschmenge zu verbessern, lässt sich mittels des Triggersignals T in einem ersten Kalibrationsschritt die Ladezeit und / oder die Entladezeit für einen unbefüllten Messkondensator CM und hierdurch die Nennkapazität des Messkondensators CM ermitteln. Es sei angemerkt, dass unter Anwendung der zuvor beschriebenen Korrektur sich die Nennkapazität besonders genau bestimmen lässt. In einem zweiten Kalibrationsschritt lässt sich für eine minimale Stapelhöhe oder Dicke QN des Druckmediums auch als minimale Quantisierungseinheit bezeichnen und ein minimaler Kapazitätswert ΔCmin für die minimal Dicke ermitteln. Hierbei entspricht der minimale Kapazitätswert ΔCmin einem zugeordneten Mindestsignalhub des analogen Signals OUT. In einem dritten Kalibrationsschritt lässt sich für die analoge Größe ein Sollwert, insbesondere für eine Sollkapazität Csoll, als ein Vielfaches der Quantisierungseinheit bzw. der minimalen Dicke QN als ein ganzzahliges Vielfaches der minimimalen Kapazität N x ΔCmin ermitteln.

In der Abbildung der Figur 2 ist eine schematisierte Ausführungsform eines Messkondensators der Schaltungsanordnung der Figur 1 dargestellt. In dem Messkondensator CM ist ein Stapel eines Druckmediums DST eingeführt. Das Druckmedium DST ist zwischen der ersten oberen Platte CM1 und der zweiten unteren Platte CM2 angeordnet, wobei das Druckmedium DST auf dem zweiten Platte CM2 aufliegt. Das Druckmedium weist eine stapelförmige Ausbildung auf, wobei eine minimale Dicke QN des Druckmediums DST genau der Größe einer Schrittweite ΔNMIN einem Mindestsignalhub des Signals OUT bewirkt. Die gesamte Soll-Stapelhöhe die vorliegend zwischen den beiden Platten CM1 und CM2 angeordnet ist, entspricht an dem analogen Ausgang ADAC einem Sollwert NSOLL des Signals OUT.

In der Abbildung der Figur 3 ist eine Bereichsauswahl bei der Anzeige des analogen Signals oder anders ausgedrückt ein Anzeigebereich AZB basierend auf einem Vielfachen der Schrittweite ΔNMIN der Quantisierungseinheit dargestellt. Um den Wert des Soll-Signals NSOLL ist ein Intervall mit der Größe der Schrittweite ΔNMIN symmetrisch ausgebildet, wobei in der Anzeigeeinheit den der Solldicke oder Soll-Stapelhöhe zugeordnete Wert des Soll-Signals NSOLL genau in der Mitte des Intervalls gegeben durch die obere Grenze NSOLL+1/2NMIN und durch die untere Grenzen NSOLL-1/2NMIN liegt. Solange der Ist-Wert des analogen Signals OUT innerhalb des Intervalls um den Soll-Signal wert NSOLL liegt wird die Soll Zahl der Anzahl der Lagen des Druckmediums angezeigt.

## Patentansprüche

1. Vorrichtung ausgebildet zur Messung der Stapelhöhe oder Dicke eines Druckmediums (DST) mittels einer Messung von Ladezeiten eines Messkondensators (CM), aufweisend,
- den Messkondensator (CM) für eine Aufnahme von Druckmedien ausgebildet ist und,
- einen Messkreis (MSK), mit einem Messverstärker (VM) mit einem Ausgang und einem Messwiderstand (RM) und der Messkondensator (CM), wobei der Messwiderstand (RM) und der Messkondensator (CM) ein RC-Glied ausbilden,
- einen Komparator (K), der einen ersten Eingang (B1) und einen Ausgang (C) aufweist, wobei der erste Eingang (B1) des Komparators (K) mit dem Ausgang des Messverstärkers (VM) verschaltet ist,
- eine Steuerungseinheit (ST), welche mit dem Ausgang (C) des Komparators und mittels eines ersten Ausgang (A) mit dem RC-Glied verschaltet ist und wobei die Steuerungseinheit (ST) zu einem ersten Zeitpunkt (t1) das RC-Glied mittels des ersten Ausgangs (A) mit einem Ladestrom (I1) beaufschlagt, wobei die Steuerungseinheit (ST) eingerichtet ist, die an einem zweiten Zeitpunkt (t2) am Ausgang (C) des Komparators (K) auftretende erste Spannungsänderung zu detektieren und aus der Differenz des ersten Zeitpunkts (t1) und des zweiten Zeitpunkts (t2) eine Ladezeit zu ermitteln und aus einem Vergleich der ermittelten Ladezeit mit einer Referenzzeit die Stapelhöhe oder Dicke des Druckmedium zu bestimmen, wobei die Stapelhöhe als das n-fache einer minimalen Dicke (QN) gegeben ist,
**dadurch gekennzeichnet, dass**
der Komparator (K) einen mit der Steuerungseinheit (ST) verbundenen zweiten Eingang (B2) aufweist und mittels der Steuerungseinheit (ST) an den zweiten Eingang (B2) während des Anliegens des Ladestroms (I1) eine erste Referenzspannung (UREF1) angelegt ist, und
die Steuerungseinheit (ST) einen zweiten Ausgang (D) aufweist und an dem zweiten Ausgang (D) der Digitaleingang eines Digital-Analog-Konverter (DAC) angeschlossen ist und an dem analogen Ausgang (ADAC) des Digital-Analog-Konverters (DAC) ein analoges Signal (OUT) anliegt, wobei die Höhe des analogen Signals (OUT) von der ermittelten Stapelhöhe oder Dicke des Druckmediums abhängt, und
- die Steuerungseinheit (ST) einen Triggereingang (EST) aufweist, und mittels eines Triggersignals (T) an dem Triggereingang (EST) eine Ermittlung der Stapelhöhe oder Dicke des Druckmediums startet.

2. Vorrichtung nach Anspruch 1, **dadurch gekennzeichnet, dass** als Referenzzeit für den ungefüllten Messkondensator (MK) eine erste Ladezeit bestimmt ist und/ oder mit einer Füllung mit einer minimalen Dicke (QN) des Druckmediums eine zweite Ladezeit bestimmt ist und / oder mit einer Füllung mit einer Soll-Stapelhöhe oder Solldicke eine dritte Ladezeit bestimmt ist.

3. Vorrichtung nach Anspruch 1 oder Anspruch 2, **dadurch gekennzeichnet, dass** an dem Ausgang (ADAC) des Digital-Analog-Konverters (DAC) eine Verstärkereinheit (V) angeschlossen ist.

4. Vorrichtung nach Anspruch 3, **dadurch gekennzeichnet, dass** die Verstärkereinheit (V) eine Anzeigeeinheit mit einen Aussteuerbereich (AZB) aufweist und ein der Soll-Stapelhöhe oder der Solldicke (NSOLL) zugeordneter Wert des Soll-Signals in der Mitte des Aussteuerbereichs (AZB) liegt.

5. Vorrichtung nach Anspruch 4, **dadurch gekennzeichnet, dass** der angezeigte Aussteuerbereich (AZB) quantisiert ist und die Schrittweite (ΔNMIN) der Quantisierung einem minimalen Signalhub des Signals (OUT) entspricht, gegeben durch die minimale Dicke (QN) des Druckmediums.

6. Vorrichtung nach Anspruch 5, **dadurch gekennzeichnet, dass** ein Intervall mit der Größe der Schrittweite (ΔNMIN) symmetrisch um den Wert des Soll-Signals ausgebildet ist, wobei in der Anzeigeeinheit den der Solldicke oder Soll-Stapelhöhe (NSOLL) zugeordnete Werte des Soll-Signals angezeigt ist, solange der Wert des analogen Signals (OUT) innerhalb des Intervalls liegt.

7. Vorrichtung nach einem Ansprüche 1 bis 6, **dadurch gekennzeichnet, dass** mittels der Steuerungseinheit (ST) zu einem dritten Zeitpunkt (t3) das RC-Glied mit einem Entladestrom (12) beaufschlagt ist und während des Anliegens des Entladestroms (12) eine zweite Referenzspannung (UREF2) an den zweiten Eingang (B2) angelegt ist und mittels der Steuerungseinheit (ST) die zu einem vierten Zeitpunkt (t4) am Ausgang (C) des Komparators (K) auftretende zweite Spannungsänderung zu detektieren und aus der Differenz des dritten Zeitpunkts (t3) und des vierten Zeitpunkts (t4) eine Entladezeit zu ermitteln und aus dem Vergleich der ermittelten Entladezeit mit der Referenzzeit die Stapelhöhe oder Dicke des Druckmedium zu bestimmen.

8. Vorrichtung nach Anspruch 7, **dadurch gekennzeichnet, dass** als Referenzzeit für den 'ungefüllten Messkondensator (MK) eine erste Entladezeit bestimmt ist und/ oder mit einer Füllung mit einer minimalen Dicke (QN) des Druckmediums eine zweite Entladezeit bestimmt ist und / oder mit einer Füllung mit einer Soll-Stapelhöhe oder Solldicke (NSOLL) eine dritte Entladezeit bestimmt ist.

9. Vorrichtung nach Anspruch 7 oder Anspruch 8, **dadurch gekennzeichnet, dass** für eine Korrekturgröße aus dem Verhältnis der dem jeweiligen Füllgrad zugeordneten Ladezeit und Entladezeit ermittelt ist und mittels der Korrekturgröße eine der anschließend ermittelten Ladezeit und / oder Entladezeiten zu korrigieren, um die Stapelhöhe des Druckmediums zu ermitteln.

10. Vorrichtung nach Anspruch 9, **dadurch gekennzeichnet, dass** die Steuerungseinheit (ST) eingerichtet ist, bei dem jeweiligen Füllgrad die Korrekturgröße aus dem Verhältnis der unmittelbar auf die Ladezeit folgende Entladezeit zu bestimmen.

11. Vorrichtung nach einem der vorangegangen Ansprüche, **dadurch gekennzeichnet, dass** der Messwiderstand (RM) einen ersten mit der Steuereinheit (ST) verschalteten Anschluss (RMA1) aufweist und der Messwiderstand (RM) einen mit einer ersten Platte (CM1) des Messkondensators (CM) verschalteten zweiten Anschluss (RMA2) aufweist und der Messkondensator (CM) eine mit einem Bezugspotential (GND) verschaltete zweite Platte (CM2) aufweist, wobei die zweite Platte (CM2) eine für die Aufnahme von Druckmedien äquidistant zu der Fläche der ersten Platte (CM1) beabstandete Fläche aufweist und der zweite Anschluss (RMA2) mit einem Eingang (VME) des Messverstärkers (VM) verschaltet ist und ein Ausgang des Messverstärkers (VM) mittels einem ersten Eingang (B1) des Komparators (K) verschaltet ist.

12. Verfahren zur Messung der Stapelhöhe oder Dicke eines Druckmediums (DST) indem Ladezeiten eines Messkondensators (CM) gemessen werden, wobei
- der Messkondensator (CM) für eine Aufnahme von Druckmedien ausgebildet ist und,
ein Messkreis (MSK) vorgesehen ist, und der Messkreis (MSK) einen Messverstärker (VM) mit einem Ausgang und einen Messwiderstand (RM) und den Messkondensator (CM) aufweist und wobei der Messwiderstand (RM) und der Messkondensator (CM) ein RC-Glied ausbilden, und
ein Komparator (K), der einen ersten Eingang (B1) und einen Ausgang (C) aufweist, vorgesehen ist, wobei der erste Eingang (B1) mit dem Ausgang des Messverstärkers (VM) verschaltet ist und die Steuerungseinheit (ST) mit dem Ausgang (C) des Komparators verschaltet ist und wobei von der Steuerungseinheit (ST) zu einem ersten Zeitpunkt (t1) das RC-Glied mittels des ersten Ausgangs (A) mit einem Ladestrom (I1) beaufschlagt wird und der Messkondensator (CM) über den Messwiderstand (RM) geladen wird, und mittels der Steuerungseinheit (ST) die zu einem zweiten Zeitpunkt (t2) am Ausgang (C) des Komparators (K) auftretende erste Spannungsänderung detektiert wird und mittels der Steuerungseinheit aus der Differenz des ersten Zeitpunkts (t1) und des zweiten Zeitpunkts (t2) eine Ladezeit ermittelt wird und aus einem Vergleich der ermittelten Ladezeit mit einer Referenzzeit die Stapelhöhe oder Dicke des Druckmedium bestimmt wird, wobei die Stapelhöhe als das n-fache einer minimalen Dicke (QN) gegeben ist,
**dadurch gekennzeichnet, dass**
der Komparator (K) einen mit der Steuerungseinheit (ST) verbundenen zweiten Eingang (B2) aufweist und mittels der Steuerungseinheit (ST) an den zweiten Eingang (B2) während des Anliegens des Ladestroms (I1) eine erste Referenzspannung (UREF1) angelegt wird, und
die Steuerungseinheit (ST) einen zweiten Ausgang (D) aufweist und an dem zweiten Ausgang (D) der Digitaleingang eines Digital-Analog-Konverter (DAC) angeschlossen ist und der Digital-Analog-Konverter (DAC) einen analogen Ausgang (ADAC) aufweist und mittels der Steuerungseinheit (ST) an dem zweiten Ausgang (D) ein digitales Signal an dem analogen Ausgang (ADAC) ein analoges Signal (OUT) angelegt wird, wobei die Höhe des analogen Signals (OUT) von der ermittelten Stapelhöhe oder Dicke des Druckmediums abhängt, und
- die Steuerungseinheit (ST) einen Triggereingang (EST) aufweist, und mittels eines Triggersignals (T) an dem Triggereingang (EST) von der Steuerungseinheit (ST) eine Ermittlung der Stapelhöhe oder Dicke des Druckmediums gestartet wird.

13. Verfahren nach Anspruch 12, **dadurch gekennzeichnet, dass** für die Ermittlung der Referenzzeit eine erste Ladezeit für den ungefüllten Messkondensator (MK) bestimmt wird und / oder eine zweite Ladezeit für eine minimale Dicke (QN) des Druckmediums bestimmt wird und / oder eine dritte Ladezeit für eine Soll-Stapelhöhe des Druckmediums bestimmt wird.

14. Verfahren nach Anspruch 12 oder 13, **dadurch gekennzeichnet, dass** mittels der Steuerungseinheit (ST) zu einem dritten Zeitpunkt (t3) das RC-Glied mit einem Entladestrom (I2) beaufschlagt wird und eine zweite Referenzspannung (UREF2) an den zweiten Eingang (B2) des Komparators angelegt wird und die zu einem vierten Zeitpunkt (t4) am Ausgang (C) des Komparators (K) auftretende zweite Spannungsänderung mittels der Steuerungseinheit (ST) detektiert wird und aus der Differenz des dritten Zeitpunkts (t3) und des vierten Zeitpunkts (t4) eine Entladezeit zu ermitteln, und anschließend mittels der Steuerungseinheit eine erste Korrekturgröße aus dem Verhältnis der Ladezeit und der Entladezeit ermittelt wird und die Ladezeit und / oder die Entladezeit mittels der ersten Korrekturgröße korrigiert wird und die Stapelhöhe des Druckmediums aus einem Vergleich der korrigierten Ladezeit und / oder korrigierten Entladezeit ermittelt wird.

15. Verfahren nach Anspruch 14, **dadurch gekennzeichnet, dass** für die Ermittlung der Referenzzeit eine erste Entladezeit für den ungefüllten Messkondensator (MK) bestimmt wird und / oder eine zweite Entladezeit für eine minimale Dicke (QN) des Druckmediums bestimmt wird und / oder eine dritte Entladezeit für eine Soll-Stapelhöhe des Druckmediums bestimmt wird.

16. Verfahren nach Anspruch 14 oder Anspruch 15, **dadurch gekennzeichnet, dass** mittels der Steuerungseinheit (ST) für einen jeweiligen Füllgrad die erste Korrekturgröße aus dem Verhältnis der unmittelbar auf die Ladezeit folgende Entladezeit bestimmt wird.

17. Verfahren nach einem der Ansprüche 12 bis 16, **dadurch gekennzeichnet, dass** die Verstärkereinheit (V) eine Anzeigeeinheit mit einen Aussteuerbereich (AZB) aufweist, wobei ein der Soll-Stapelhöhe oder der Solldicke zugeordneter Wert des Soll-Signals (NSOLL) in der Mitte des Aussteuerbereichs (AZB) liegt und in der Anzeigeeinheit den der Solldicke oder Soll-Stapelhöhe zugeordnete Werte des Soll-Signals (N-Soll) angezeigt wird, solange der Wert des analogen Signals (OUT) innerhalb des Intervalls liegt.
